# EUROPÄISCHE PATENTANMELDUNG

(11) **EP 0 937 555 A2**
(43) Veröffentlichungstag der Anmeldung: **25.08.1999**
(21) Anmeldenummer: 99101525.6
(22) Anmeldetag: 27.01.1999
(51) Int. Cl.: B28B 7/38, B28B 1/26, B28B 13/02

(54) **Verfahren zur Herstellung einer keramischen Rohfolie und Vorrichtung zur Bereitstellung einer keramischen Rohfolie**

(30) Priorität: 20.02.1998 DE 19807256
(71) Anmelder: SIEMENS AKTIENGESELLSCHAFT, 80333 München (DE)
(72) Erfinder: Ahne, Stephan, 82031 Grünwald (DE); Rossner, Wolfgang, Dr., 83607 Holzkirchen (DE); Kobusch, Manfred, 81739 München (DE)

(57) **Zusammenfassung**

Es wird ein Verfahren zur Herstellung einer Rohfolie (11), insbesondere einer keramischen Rohfolie beschrieben, bei dem ein Schlicker (flüssige Partikelsuspension), aus dem die Rohfolie (11) gebildet wird, auf ein Trägersubstrat (13) aufgetragen wird und bei dem nach dem Trocknen des Schlickers die entstandene Rohfolie (11) vom Trägersubstrat (13) abgelöst wird. Um eine möglichst geringe Haftungswirkung zwischen der Rohfolie (11) und dem Trägersubstrat (13) zu erreichen, was eine Beschädigung der Rohfolie (11) beim Ablösen verhindert, wird vorgeschlagen, daß auf das Trägersubstrat (13) vor dem Auftragen des Schlickers eine oberflächenaktive Substanz (14), die hydrophile (15) und hydrophobe (16) Gruppen aufweisen kann, aufgebracht wird und daß der Schlicker auf die oberflächenaktive Substanz (14) aufgetragen wird. Das leichte Ablösen von der Rohfolie (11) wird durch den Kontakt zwischen den hydrophoben Gruppen der oberflächenaktiven Substanz (14) und dem hydrophoben Trägersubstrat (13), beziehungsweise durch den Kontakt zwischen zwei hydrophoben Lagen der oberflächenaktiven Substanz (14) gewährleistet.

## Beschreibung

Die vorliegende Erfindung betrifft ein Verfahren zur Herstellung einer Rohfolie, insbesondere einer keramischen Rohfolie, bei dem ein Schlicker (Partikelsuspension), aus dem die Rohfolie gebildet wird, auf ein Trägersubstrat aufgetragen wird und bei dem nach dem Trocknen des Schlickers die entstandene Rohfolie vom Trägersubstrat abgelöst wird. Weiterhin betrifft die Erfindung eine Vorrichtung zur Bereitstellung einer Rohfolie, vorzugsweise einer keramischen Rohfolie, mit einem Trägersubstrat, auf dem die Rohfolie lösbar angeordnet ist.

Zur Herstellung von Rohfolien wird üblicherweise ein Schlicker (flüssige Partikelsuspension) auf der Basis wässriger oder organischer Bindersysteme mittels eines Ziehschuhs mit definiertem Austrittsspalt auf ein Trägersubstrat aufgetragen. Die Benetzung des Substrats wird im wesentlichen durch die Oberflächenspannung des Schlickers, die molekularen Kräfte (von den Van der Waalskräften bis hin zur Chemisorption) zwischen den Schlickerbestandteilen und dem Trägersubstrat und durch die Oberflächenrauhigkeit des Trägersubstrats bestimmt. Nach dem Trocknen des Schlickers durch Verdampfung einzelner Komponenten des Bindersystems muß die entstandene Rohfolie für die Weiterverarbeitung, beispielsweise Stanzen, Laminieren, Sintern oder dergleichen vom Trägersubstrat abgelöst werden. Von entscheidender Bedeutung ist hier das Verhältnis der Haftfestigkeit zur Zerreißfestigkeit der Rohfolie. Ist die Haftfestigkeit auf dem Trägersubstrat größer als die Zerreißfestigkeit der Rohfolie, dann wird die Rohfolie beim Ablösen zerstört. Einfluß auf die Wechselwirkung -und damit auch auf die Haftfestigkeit- zwischen Trägersubstrat und Rohfolie haben im wesentlichen die Oberflächenspannung des Schlickers, molekulare Kräfte zwischen den Schlickerbestandteilen und dem Trägersubstrat, elektrostatische Kräfte und die Oberflächenrauhigkeit des Trägersubstrats.

Bisher wird die Haftung zwischen dem Trägersubstrat und der Rohfolie durch Variation der Zusammensetzung des Schlickers und der chemischen Beschaffenheit des Trägersubstrats, das meist eine Kunststoffolie ist, minimiert. Auch werden zur Vermeidung einer mechanischen Verankerung zwischen der Rohfolie und dem Trägersubstrat häufig Trägersubstrate mit sehr glatten Oberflächen verwendet. Dies führt jedoch zu einer eingeschränkten Verträglichkeit verschiedener Schlickermaterialien mit unterschiedlichen Trägersubstraten, was für eine universelle Anwendbarkeit des Herstellungsverfahrens von Nachteil ist. So ist beispielsweise die Wahl des Bindersystems eng mit den Eigenschaften des Schlickers verknüpft, die wiederum nicht beliebig variiert werden dürfen. Weiterhin kann bei zu hoher Haftfestigkeit die Rohfolie beim Ablösen vom Trägersubstrat beschädigt werden.

Der Erfindung liegt somit die Aufgabe zugrunde, die im Stand der Technik genannten Nachteile zu vermeiden. Insbesondere soll ein Verfahren zur Herstellung von Rohfolien bereitgestellt werden, bei dem auf eine besondere Anpassung des Schlickers an das Trägersubstrat und umgekehrt verzichtet werden kann. Weiterhin soll auch die Haftfestigkeit zwischen der Rohfolie und dem Trägersubstrat gezielt eingestellt werden können. Gemäß einem weiteren Aspekt der Erfindung soll eine entsprechende Vorrichtung zur Bereitstellung einer Rohfolie geschaffen werden.

Gemäß dem ersten Aspekt der Erfindung wird die Aufgabe gelöst durch ein Verfahren zur Herstellung einer Rohfolie, insbesondere einer keramischen Rohfolie, bei dem ein Schlicker, aus dem die Rohfolie gebildet wird, auf ein Trägersubstrat aufgetragen wird und bei dem nach dem Trocknen des Schlickers die entstandene Rohfolie vom Trägersubstrat abgelöst wird, das dadurch gekennzeichnet ist, daß auf das Trägersubstrat vor dem Auftragen des Schlickers eine oberflächenaktive Substanz aufgebracht wird und daß der Schlicker auf die oberflächenaktive Substanz aufgetragen wird.

Das erfindungsgemäße Verfahren vereinfacht die Prozeßentwicklung, erhöht die Qualität der Rohfolie sowie die Fertigungsausbeute und ist universell einsetzbar. Insbesonder kann auf eine Anpassung des Schlickers an das Trägersubstrat und umgekehrt verzichtet werden.

Durch die Beschichtung des Trägersubstrats mit einer oberflächenaktiven Substanz kann die Haftfestigkeit zwischen Trägersubstrat und Rohfolie minimiert werden. Die oberflächenaktive Substanz vermittelt zwischen den Grenzflächeneigenschaften des Schlickers und dem Trägersubstrat.

Vorzugsweise können mit dem erfindungsgemäßen Verfahren keramische Rohfolien hergestellt werden. Keramische Rohfolien sind ungesinterte, dünne Schichten aus polymergebundenen Partikeln keramischer Pulver. Sie stellen die Basiselemente für monolithische Vielschichtkeramiken dar oder dienen zur Herstellung keramischer Einzelschichten oder Membranen.

Vorteilhafte Ausgestaltungen des Verfahrens ergeben sich aus den rückbezogenen Unteransprüchen.

Bevorzugt kann der Schlicker und/oder das Trägersubstrat hydrophile und/oder hydrophobe Eigenschaften aufweisen. Wie weiter unten näher beschrieben wird, wirkt sich dies vorteilhaft auf die Minimierung der Haftfestigkeit wie auch auf die Benetzbarkeit des Trägersubstrats durch den Schlicker aus.

Erfindungsgemäß kann die oberflächenaktive Substanz bei hydrophobem Trägersubstrat und hydrophobem Schlicker, beziehungsweise bei hydrophilem Trägersubstrat und hydrophilem Schlicker, in Form einer geradzahlig molekularen Lage auf das Trägersubstrat aufgebracht werden. Eine ungeradzahlig molekulare Lage der oberflächenaktiven Substanz ist insbesondere bei hydrophilem Trägersubstrat und hydrophobem Schlicker, beziehungsweise bei hydrophobem Trägersubstrat und hydrophilem Schlicker von Vorteil.

In weiterer Ausgestaltung kann die oberflächenaktive Substanz eine oder mehrere hydrophile und eine oder mehrere hydrophobe Gruppen aufweisen.

Wenn beispielsweise die hydrophilen Anteile der oberflächenaktiven Substanz mit hydrophilen Anteilen des Schlickers in Wechselwirkung treten, ergibt sich eine gute Benetzung des Schlickers auf dem Trägersubstrat. Dies liegt daran, daß die Wechselwirkung hydrophil-hydrophil sehr stark ist.

Erfindungsgemäß können sich die eine oder mehrere hydrophobe Gruppen der oberflächenaktiven Substanz an den hydrophoben Schlicker oder das hydrophobe Trägersubstrat anlagern.

Die leichte Trennung der Rohfolie von dem Trägersubstrat wird durch die Anlagerung der hydrophoben Teile der oberflächenaktiven Substanz entweder an ein hydrophobes Trägersubstrat oder an eine hydrophobe Rohfolie ermöglicht, da die Wechselwirkung hydrophob-hydrophob im Gegensatz zu hydrophilhydrophil sehr schwach ist.

In weiterer Ausgestaltung kann die oberflächenaktive Substanz eine 0.001 bis 50%-ige wässrige Lösung sein. Vorteilhaft handelt es sich bei der oberflächenaktiven Substanz um eine 1 bis 10%-ige Lösung, beispielsweise eine Agitan-281-Lösung.

Vorteilhaft wird die oberflächenaktive Substanz vor dem Auftragen des Schlickers getrocknet, beispielsweise durch einen Verdampfungsprozeß.

Erfindungsgemäß kann die oberflächenaktive Substanz und/oder der Schlicker durch einen Ziehschuh oder durch Verreiben, beispielsweise mittels eines Schwamms, aufgetragen werden.

Bevorzugt kann eine Rohfolie mit einer Dicke von 2 bis 1000µm, vorzugsweise 5 bis 200µm hergestellt werden.

In weiterer Ausgestaltung kann das Trägersubstrat als Folie, vorzugsweise als Kunststoffolie ausgebildet sein. Als Beispiel für eine solche Folie ist unter anderem eine Hostaphanfolie zu nennen.

Durch das erfindungsgemäße Verfahren kann bei geringer Abhängigkeit von schwer kontrollierbaren Prozeßparametern eine zuverlässige Minimierung der Haftfestigkeit bei gleichzeitig guter Benetzung des Trägersubstrats durch den Schlicker erreicht werden. Besondere Bedeutung haben diese vorteilhaften Eigenschaften bei der Herstellung dünner Rohfolien, die grundsätzlich eine verminderte Eigenfestigkeit aufweisen.

Gemäß dem zweiten Aspekt der vorliegenden Erfindung wird eine Vorrichtung zur Bereitstellung einer Rohfolie, vorzugsweise einer keramischen Rohfolie vorgeschlagen, mit einem Trägersubstrat, auf dem die Rohfolie lösbar angeordnet ist, insbesondere unter Verwendung des wie vorstehend beschriebenen erfindungsgemäßen Verfahrens, die dadurch gekennzeichnet ist, daß zwischen der Rohfolie und dem Trägersubstrat eine oberflächenaktive Substanz vorgesehen ist.

Durch die Vorrichtung wird erreicht, daß die Rohfolie aufgrund der geringen Haftfestigkeit zwischen Rohfolie und dem Trägersubstrat leicht und ohne Beschädigungen vom Trägersubstrat abgelöst werden kann. Zu den Vorteilen, Effekten, Wirkungen und Funktionen der Vorrichtung sowie ihrer einzelnen Merkmale wird auf die obigen Ausführungen zum erfindungsgemäßen Verfahren vollinhaltlich Bezug genommen und hiermit verwiesen.

Bevorzugte Ausgestaltungen der erfindungsgemäßen Vorrichtung ergeben sich aus den jeweiligen rückbezogenen Unteransprüchen.

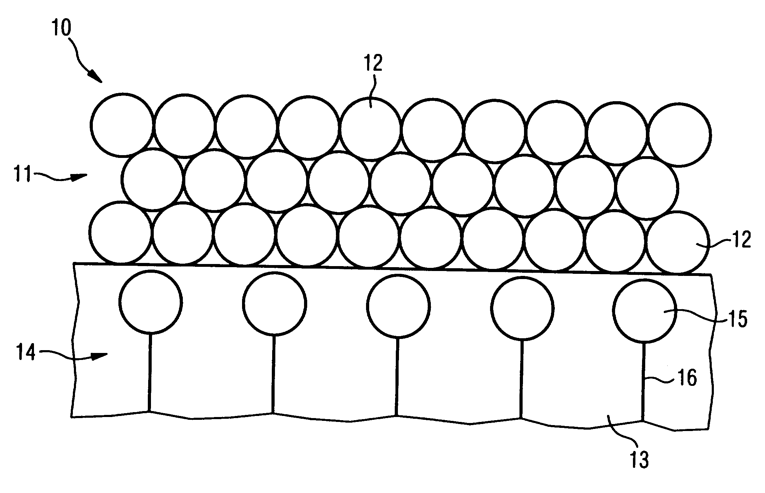

Die Erfindung wird nun anhand eines Ausführungsbeispiels unter Bezugnahme auf die beiliegende Zeichnung näher erläutert. Dabei zeigt die einzige Fig.1 einen schematischen Querschnitt durch eine erfindungsgemäße Vorrichtung zur Bereitstellung einer Rohfolie.

Wie aus Fig.1 ersichtlich ist, weist die Vorrichtung 10 zur Bereitstellung einer Rohfolie ein Trägersubstrat 13 auf, auf dem eine oberflächenaktive Substanz 14 aufgetragen ist. Die oberflächenaktive Substanz 14 weist sowohl hydrophobe Gruppen 16, als auch hydrophile Gruppen 15 auf. Auf der oberflächenaktiven Substanz 14 ist weiterhin eine aus einem Schlicker gebildete Rohfolie 11, insbesondere eine keramische Rohfolie, angeordnet. Die Rohfolie 11 weist ebenfalls hydrophile Bestandteile 12 auf.

Nachfolgend wird ein Ausführungsbeispiel für das erfindungsgemäße Verfahren zur Herstellung einer Rohfolie beschrieben.

Auf ein als Kunststoffolie, beispielsweise als Hostaphanfolie ausgebildetes Trägersubstrat 13, das hydrophobe Eigenschaften aufweist, wird eine dünne Schicht einer 0.001 bis 50%-igen oberflächenaktiven Substanz 14 mit hydrophoben 16 und hydrophilen 15 Gruppen aufgetragen. Bevorzugt kann die oberflächenaktive Substanz eine 1 bis 10%-ige wässrige Agatinlösung sein. Die Auftragung erfolgt mittels eines Ziehschuhs oder durch Verreiben mit einem Schwamm. Es entsteht ein geschlossener Film aus der oberflächenaktiven Substanz 14, deren hydrophobe Gruppen 16 sich an das hydrophobe Trägersubstrat 13 anlagern und deren hydrophile Gruppen 15 in Wechselwirkung mit dem über dem Film verteilten und abdunstenden Restwasser treten. Dabei ordnen sich die Tensidmoleküle so an, daß der hydrophile Molekülanteil 15 die Oberfläche der Tensidschicht bildet. Nach dem Trocknen durch Verdunstung wird ein wässriger Schlicker, der ebenfalls hydrophile Bestandteile 12 aufweist, über einen Ziehschuh ausgezogen. Die hydrophilen Gruppen 15 der oberflächenaktiven Substanz 14 treten mit den hydrophilen Bestandteilen 12 des Schlickers in Wechselwirkung. Eine gute Benetzung des Schlickers auf dem Trägersubstrat 13 ist die Folge.

Nach dem Trocknen kann die aus dem Schlicker gebildete Rohfolie 11 leicht entfernt werden, da die hydrophoben Gruppen 16 der oberflächenaktiven Substanz 14 keine nennenswerte Haftung auf dem hydrophoben Trägersubstrat 13 aufweisen. Durch das Verfahren können insbesondere dünne Rohfolien mit einer Dicke von kleiner 10µm freitragend hergestellt werden.

## Patentansprüche

1. Verfahren zur Herstellung einer Rohfolie, insbesondere einer keramischen Rohfolie, bei dem ein Schlicker, aus dem die Rohfolie gebildet wird, auf ein Trägersubstrat aufgetragen wird und bei dem nach dem Trocknen des Schlickers die entstandene Rohfolie vom Trägersubstrat abgelöst wird, dadurch gekennzeichnet, daß auf das Trägersubstrat vor dem Auftragen des Schlickers eine oberflächenaktive Substanz aufgebracht wird und daß der Schlicker auf die oberflächenaktive Substanz aufgetragen wird.

2. Verfahren nach Anspruch 1, dadurch gekennzeichnet, daß der Schlicker und/oder das Trägersubstrat hydrophile und/oder hydrophobe Eigenschaften aufweist.

3. Verfahren nach Anspruch 1 oder 2, dadurch gekennzeichnet, daß die oberflächenaktive Substanz eine oder mehrere hydrophile und eine oder mehrere hydrophobe Gruppen aufweist.

4. Verfahren nach Anspruch 3, dadurch gekennzeichnet, daß sich die eine oder mehreren hydrophoben Gruppen der oberflächenaktiven Substanz an den hydrophoben Schlicker oder das hydrophobe Trägersubstrat anlagern.

5. Verfahren nach einem der Ansprüche 1 bis 4, dadurch gekennzeichnet, daß die oberflächenaktive Substanz eine 0.001 bis 50%-ige wässrige Lösung ist.

6. Verfahren nach einem der Ansprüche 1 bis 5, dadurch gekennzeichnet, daß die oberflächenaktive Substanz vor dem Auftragen des Schlickers getrocknet wird.

7. Verfahren nach einem der Ansprüche 1 bis 6, dadurch gekennzeichnet, daß die oberflächenaktive Substanz und/oder der Schlicker durch einen Ziehschuh oder durch Verreiben aufgetragen werden.

8. Verfahren nach einem der Ansprüche 1 bis 7, dadurch gekennzeichnet, daß eine Rohfolie mit einer Dicke von 2 bis 1000µm hergestellt wird.

9. Verfahren nach einem der Ansprüche 1 bis 8, dadurch gekennzeichnet, daß das Trägersubstrat als Folie, vorzugsweise als Kunststoffolie ausgebildet ist.

10. Vorrichtung zur Bereitstellung einer Rohfolie (11), vorzugsweise einer keramischen Rohfolie, mit einem Trägersubstrat (13), an dem die Rohfolie (11) lösbar angeordnet ist, insbesondere unter Verwendung eines Verfahrens nach einem der Ansprüche 1 bis 9, dadurch gekennzeichnet, daß zwischen der Rohfolie (11) und dem Trägersubstrat (13) eine oberflächenaktive Substanz (14) vorgesehen ist.

11. Vorrichtung nach Anspruch 10, dadurch gekennzeichnet, daß die Rohfolie (11) eine Dicke von 2 bis 1000µm aufweist.

12. Vorrichtung nach Anspruch 10 oder 11, dadurch gekennzeichnet, daß das Trägersubstrat (13) als Folie, vorzugsweise als Kunststoffolie ausgebildet ist.

13. Vorrichtung nach einem der Ansprüche 10 bis 12, dadurch gekennzeichnet, daß die Rohfolie (11) und/oder das Trägersubstrat (13) hydrophile und/oder hydrophobe Eigenschaften aufweist.

14. Vorrichtung nach einem der Ansprüche 10 bis 13, dadurch gekennzeichnet, daß die oberflächenaktive Substanz (14) eine oder mehrere hydrophile (15) und eine oder mehrere hydrophobe (16) Gruppen aufweist.

15. Vorrichtung nach Anspruch 14, dadurch gekennzeichnet, daß die eine oder mehreren hydrophoben Gruppen (16) der oberflächenaktiven Substanz (14) an der hydrophoben Rohfolie (11) oder dem hydrophoben Trägersubstrat (13) angelagert ist/sind.
